# EUROPEAN PATENT APPLICATION

(11) **EP 1 959 382 A1**
(43) Date of publication of application: **20.08.2008**
(21) Application number: 08250540.5
(22) Date of filing: 14.02.2008
(51) Int. Cl.: G06Q 10/00

(54) **Organisation representational system**

(30) Priority: 14.02.2007 GB 0702822
(71) Applicant: Salamander Enterprises Limited, Crowthorne Berkshire RG45 7AW (GB)
(72) Inventor: Smith, Simon, York YO10 5ZF (GB)
(74) Representative: Wood, Graham

(57) **Abstract**

The invention relates to a system and method for the generation, testing and use of a model of at least part of an organisation. The model includes a number of elements and components linked thereto. Typically where there are a number of components, some of the components are linked so as to allow data from one component to be passed to a linked component and used in the performance of that component. This allows the model to be accessed and utilized by user's with a reduced technical expertise in comparison to previous systems as many of the components can be performed automatically, and in the required sequence once the user has accessed and commenced use of a first component.

## Description

The invention to which this application relates is a system which allows aspects of an organization to be represented more effectively graphically and for tasks which are performed within the organization to be performed more effectively and efficiently and in a logical manner by personnel or users within the organization.

The applicant has a series of patent applications and granted patents which relate to improvements in the representation and operation of particular aspects of organizations. Organisations can be relatively complex working environments which often require a series of tasks to be performed in a particular order by processing systems in conjunction with the human users, for the aims and progression of the organization to be achieved in the desired manner. Frequently a series of tasks are required to be performed to allow a particular aspect of the organization to be completed and furthermore the tasks or elements which are required to be performed usage a range of processing components and data of different formats and which have different requirements. In particular, where the tasks are required to be performed using electronic processing systems and networks there is a need to be able to represent the tasks or elements to be displayed in a logical graphical form which allows the user interacting with the systems to be able to navigate their way through the elements required and, as they do so, for the processing components required to be performed for achievement of the elements to be accessed and completed in as efficient a manner as possible.

The applicant has identified this problem and their earlier patents and patent application have addressed many of the issues by providing a means whereby a series of business models can be generated, each model typically representing a particular aspect of the organization, The elements required to be referred to allow the aspect to be achieved can be identified, as can the processing components required to be used to allow completion of the business model.

The components can then be linked to a graphical representation of the business model by the generation of the series of elements to represent the business model. The elements can be graphically represented to provide a graphical user interface with the model via a display screen. In use, a user selection of the appropriate element allows a direct link to be facilitated to the underlying processing component or components which are required to be utilized in order for the particular element to be completed. The access to the component or components is typically provided automatically upon the selection of an element by the user and therefore avoids the need for the user to have to search through the organisation system network for the particular components and operate them in a desired manner. Furthermore, as the components can often be in different formats and use differing processing means the ability to access the same via the selection of an element of a business model, greatly reduces the skill level requirements of the user and allows the elements, and hence business model, to be performed in a logical manner and furthermore be performed in a repeatable manner each time.

The aim of the present invention is to provide improvements to the above mentioned system, which improvements allow further efficiency in use.

In a first aspect of the invention there is provided an organization modelling system said modeling system including the identification of at least one business model for a series of tasks to be performed within the organization, identifying for said business model a series of elements which arc required to be performed as part of the business model, identifying one or more processing components which are required to be utilized to allow each element to be completed, graphically representing each of said elements on a display screen in a manner to allow user interaction therewith, linking the one or more components to the appropriate element and wherein upon user interaction with an clement of the display, access is gained to said one or more linked components to utilize the same to perform the element.

In one embodiment at least one of said components is linked to at least one other of the said components such that data obtained by performance of a first component can be automatically passed to said linked component to allow that component to then be performed.

Typically those components which are linked can be performed without the need for further user interaction with the graphical interface of the elements. This therefore reduces the need for user interaction with the graphical interface and, upon the initial selection of an element, a series of linked components for that element and/or other elements within the same business model can be performed automatically. In one embodiment the components are provided in a linked series and the components are performed in a predefined sequence.

Typically the linking of the components is controlled such that a linked component will only be performed if data in a predetermined format or within predetermined parameters is received from the previous component. Thus, if no data, or data in an unallowed format, is received from the previous component the performance of the next component is not permitted and user intervention with the graphical interface is then requited. Typically, should this occur and further interaction be required then a graphical indication is generated to the user.

In one embodiment, the linking together of two or more components is provided as part of a live system in accordance with the invention such that the procedure is repeatable.

In one preferred embodiment the ability to link the components is used as a test or development tool to allow existing business models to be tested or, as new business models are developed, to allow the identified components for various elements and links between the same to be checked and validated to ensure that the link will operate efficiently and repeatedly before the business model becomes live, and to identify the need for modifications to be made to components, or for required components to be identified, such that the business model can remain effective.

This aspect of the invention allows the business model to be accessed and utilized with a reduced technical expertise in comparison to previous systems as many of the components can be performed automatically, and in the required sequence once the user has accessed and commenced use of a first component, rather than being required to interact with each of the components. In this way, whether as an operational or a test system, the developer of the systems can ensure a greater degree of involvement and validation by non-technical people.

In one embodiment all of the components which are identified for each element of the business model are linked, in which case the user can be certain that when a particular element is selected via the interface, all of the required components for that element will be performed and once performed they can then select the next element, and so on until the required elements are completed. In addition or alternatively, components located within different elements can be linked to allow the transfer of data between the same if it is identified that this is of advantage to the performance of the system. In this arrangement more than one element may be completed as a result of the user accessing a first component.

In a further embodiment of the invention there is provided a system for the representation and operation of an organization by at least one business model, said system including first and second development tools, wherein the first development tool is used to develop a business model which represents the principles expressed by the organization with respect to the business model and the second development tool is used to test the business model which is developed and identify those elements and/or components of the business model which are most important for achieving the expressed principles, and adapting the business model accordingly.

In a yet further aspect of the invention there is provided an organization representation system, said system including at least one business model representing at least one task to be performed within the organization, identifying for said business model a series of elements which are requited to be performed as part of the business model, identifying one or more components which are required to be utilized to allow each element to be completed, graphically representing each of said elements in a manner to allow user interaction therewith, linking the appropriate components to each element wherein upon user interaction with said element access is gained to said one or more components for that element.

In one embodiment the system includes a means for providing an indication to the user of metrics associated with the execution of the components and with the effectiveness of the business model, including the progression of the performance of the business model at a given instant of time.

In one embodiment the indication is a change in condition of the graphical interface which allows the elements to be provided in a first condition if the components linked thereto have not been performed and the element to change to a second condition once the components for that element have been completed.

In one embodiment there is provided a third condition which can be shown for each element, said condition generated int-ertnediate the first and second indications so as to show to the user which particular component of an clement is being performed at that time.

In one embodiment there is provided a graphical representation which shows the extent of completion of each element, or components linked to said element.

In one embodiment the invention allows the possibility of the execution of a plurality of business models, such as nested business models.

If in an instance of use no component exists at that stage, a stub or proxy component may be created that will execute alongside real components, but at the point of execution, the system will ask the user to play the part of that component, by for example, obtaining the data and computing a value for the component which is then input into and used by the system. This is useful for a testing mode prior to developing components for real.

In a further aspect of the invention there is provided a method of generating, testing and/or using a model of at least part of an organisation, said method including the steps of developing the model representing at least one task to be performed within the organization, identifying for said model a series of elements which are required to be performed as part of the model, identifying one or more components which are required to be utilized to allow each clement to be completed, graphically representing each of said elements in a manner to allow user interaction therewith, linking the appropriate components to each element such that upon user interaction with said element access is gained to said one or more components for that element which are then performed.

In onc embodiment at least some of the plurality of components are linked so as to allow data used and/or generated in the performance of a first component to be passed to a linked component and used in the performance of that component without the need for user interaction with the model.

In one embodiment the method includes generating an indication to the user of the performance of said linked components. In one embodiment the components are linked in series and performed in a predefined sequence.

Specific embodiments of the invention are now described wherein;
Figure 1 illustrates in a schematic manner a business model in accordance with one embodiment of the invention;
Figure 2 illustrates a number of the components of Figure 1 in accordance with the invention; and
Figure 3 illustrates a further aspect of the invention.

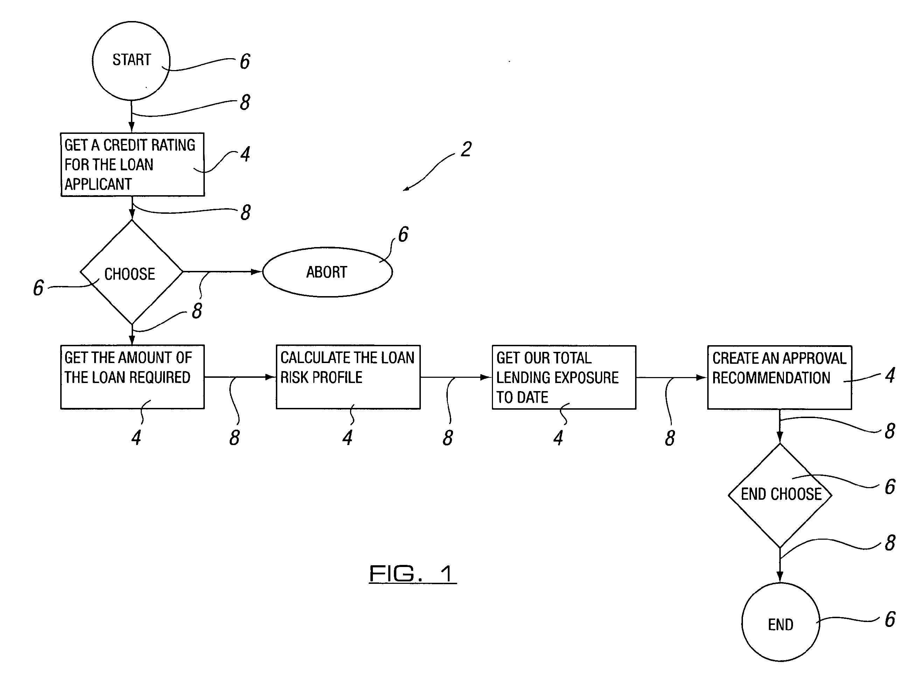

Referring firstly to Figure 1 there is illustrated a business model prepared in accordance with the invention. The business model 2 is prepared to represent a particular task or series of tasks to be performed to allow a particular aspect to be achieved which, in this example is to create a loan approval recommendation within a financial organization.. As set out in previous patents of the proprietor, the business model includes a graphical interface as shown which includes a series of elements 4 and other decision points 6 graphically represented. Each element 4 represents a particular action which is required to be completed in order to allow the progression of the aspect through to completion and are developed and inserted in the business model as a result of analysis of the particular aspect requirements. The elements 4 are provided to indicate to the user via the graphical interface, the steps to be taken and the sequence is indicated by the provision of direction lines 8 which join the elements and decision points 6 in the required sequence of performance.

The elements 4 and decision points allow the user to select and access one or more processing components which are required to be performed and completed in order for that element to be achieved. These components may be shown with the elements or alternatively are viewable when the user places a cursor over the particular element. The components can then be selected by the user placing the cursor on the same and typically entering a mouse "click".

The components can be software tools and/or information databases which are required to be accessed and performed in order for an element to be completed.

For example, for one element, a number of components may be required to be performed. Each of these components can be shown on a display screen when the particular element is selected. The user is then provided with the required components for that element immediately and typically interacts with the components to perform the same. The interaction conventionally includes inputting data values representative of the requirement at that time and allowing the component to use that data to perform a particular task. The user may have to repeat this interaction for each component linked to each element.

In accordance with the invention, at least some, selected, components of the model, are linked so as to allow data which is generated from the use of a first component, to be transmitted to and received by a linked component thereby allowing that data to then subsequently be used in the performance of the linked component. This therefore means that when a user interacts with a particular element of the model, and thereby utilizes a first component which is rendered accessible by interaction with the element, the user can interact with the component to perform the required operation or alternatively the performance of the component is commenced automatically. The data generated from that component can then be transferred to a linked component and used in that component, without any further interaction being required by the user. This therefore means that, for example, all of the components which have been identified for a particular element can be linked and performed in an automatic sequence without user interaction. This is in contrast to a conventional system where the user is typically required to interact with each component such that the interaction comprises performing a particular component, then interacting with the next component, and so on until the performance of the components for that element is completed. The linking of the components is found to increase the speed of operation of the components and, in many cases, can also improve the reliability of the performance of the components, as the possibility of user error is removed.

In one embodiment, the linking of the various components may require some intermediate processing of data into required formats to allow the successful transfer of the data between the components.

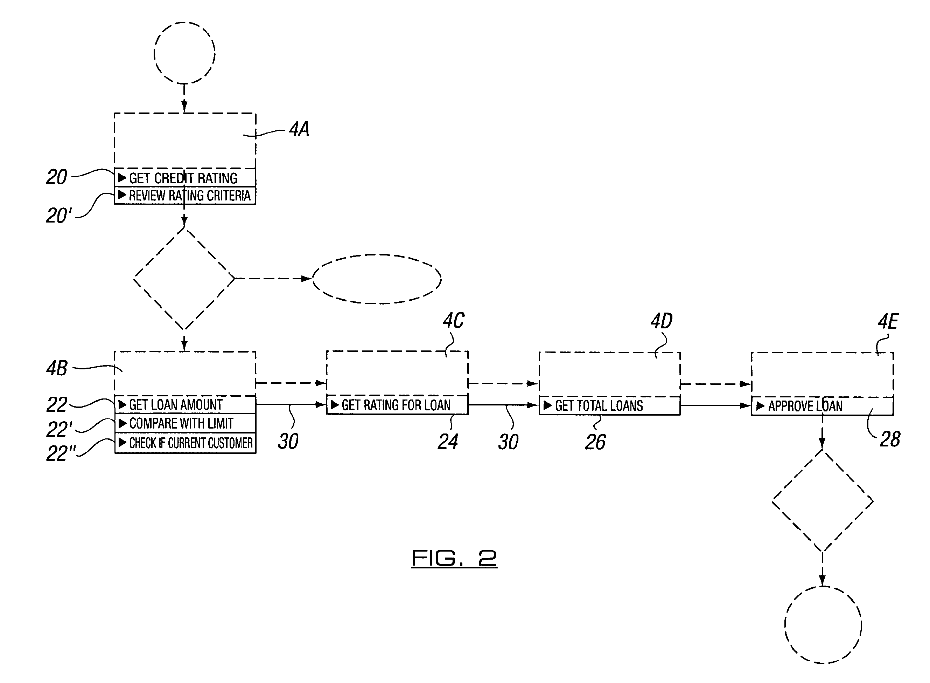

Figure 2 illustrates a series of components, which are allocated to the elements 4 of business model 2 which is shown in broken lines. The first and second components 20,20' arc requited for performance of particular element 4A. The components 22, 22' 22" are requited for element 4B. The component 24 is required for element 4C, component 26 is required for element 4D and component 28 is required for element 4E. These components need not normally be viewable in the graphical interface which is generated of the business model, with the business model, instead, being represented by the elements 4 and links 6 between the same in the graphical interface. However, when the user selects a particular element, the components for that element are rendered accessible to the user and the user can interact with the same via a display generated on their screen, and their mouse or keyboard. Thus, the representation in figure 2 is for illustrative purposes only for the purpose of indicating how the invention operates and it will be seen that certain of the components 20, 20' and 22,22', 22" of the same element arc linked and also that components 22", 24, 26 of different elements can also, in one embodiment, be linked 30. This linking means that data which is generated as a result of the performance of a first component can be transferred automatically to the next linked component and the performance of that component commences automatically, without the need for user interaction. It should however be appreciated that typically, the linking will include a check being performed to ensure that the data being transferred, lies within certain parameters. If the data does not lie within these parameters, then the transfer of the data will be prevented and the next component will not be performed and instead the system will revert back to requiring user interaction, typically with an indication of a problem having occurred.

The automatic sequence of performance of the components will typically run until the last linked component in that sequence of components has been performed whether that be linked components for the same element or different elements. At that stage, an indicator will typically be provided to the user so that the user can then take whatever further action is necessary to proceed.

In the embodiment shown for elements 4a and 4b, in each case, the element requires more than one component to be performed and these components can be linked in accordance with the invention. This therefore means that upon the user selecting a particular element from the graphical interface, they can be confident that all the components which are required to be performed in order for that element to be achieved, will be performed automatically to achieve the final data set for that selected element. Typically at the start of the performance of the linked components the user will be required to implant data to allow the components to be performed on the basis of that data.

In another embodiment, the components which are linked may include components from different sets and it will be appreciated that the particular links which can be achieved, are dependent on the data required and the data processing requirements.

A further feature of the invention is the ability to perform testing of the business model prior to putting the same into commercial implementation. This testing allows particular components, and links between components, to be tested and assessed to firstly ensure that the individual components operate in the required manner, and secondly that the components which are linked together also operate in a required manner.

The ability to test and perform the same prior to commercial implementation, means that possible problems in important data processing, can be avoided

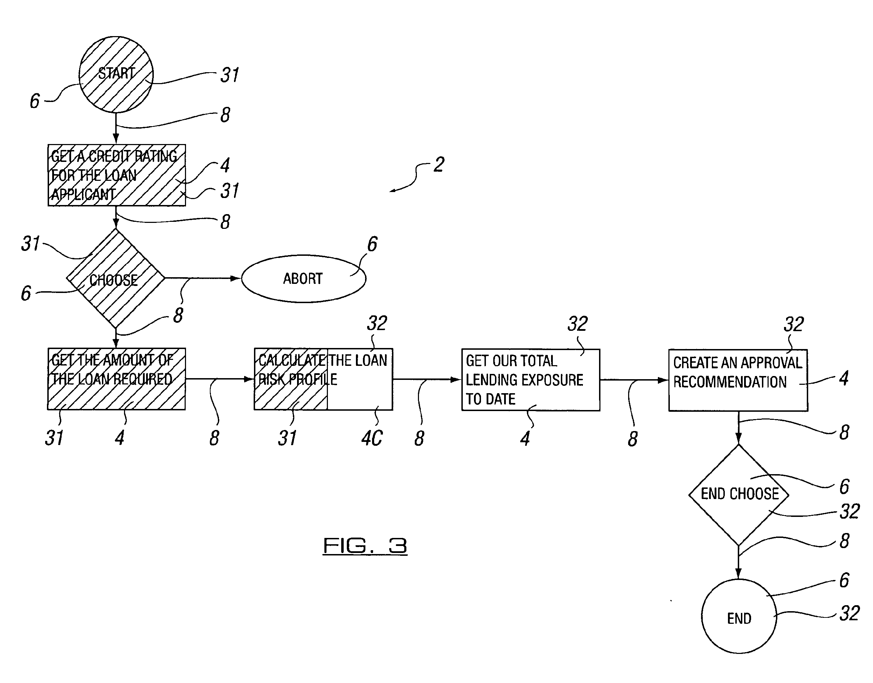

Referring now to Figure 3, there is illustrated a further aspect of the invention in which the same business model 2 of Figure 1, is shown. However, in this case, the graphical representation of the business model includes a further feature of the invention which is provided to illustrate to the user the progression of the business model in terms of completion of the elements. This is achieved by providing a first graphical indication 31 of those elements and decision points which have been passed or performed and a second graphical representation different from the first, to indicate those elements and decision points 4, 6 which have yet to be per formed. Thus, immediately, the user is aware from the graphical interface what steps are still to be performed in order to complete the business model. Furthermore, it is possible in one embodiment, and is illustrated with regard to clement 4C, to provide an indication as to the progression of the performance of components of a particular element at that instant of time. Thus, in element 4C, part of the same is provided with a first graphical indication 31 and part of the same is provided in a second graphical indication 32 to thereby indicate that this element is in effect live at that given instant of time and that the component or components linked to that element are partially completed.

It should be appreciated that the actual indications which are used, will be selected to provide the required visual effect and that the graphical indicators provided in Figure 3, are for illustrative purposes only.

## Claims

1. An organization modeling system, said system including the identification of at least one model for a series of tasks to be performed within the organization, identifying for said model a series of elements which are required to be performed as part of the model, identifying one or more processing components which are required to be utilized to allow each element to be completed, graphically representing each of said elements on a display screen in a manner to allow user interaction therewith, linking the one or more components to the appropriate element and wherein upon user interaction with an element of the display, access is gained to said one or more linked components to utilize the same to perform the element.

2. A system according to claim 1 wherein upon the selection of an element, a series of linked components for that element are performed automatically.

3. A system according to claim 2 wherein the components are provided in a linked series and the components are performed in a predefined sequence.

4. A system according to claim 1 wherein at least one of said components is linked to at least one other of the said components such that data obtained by performance of a first component can be automatically passed to said linked component to allow that component to then be performed.

5. A system according to claim 2 wherein those components which are linked are performed without the need for further user interaction with the graphical interface of the elements

6. A system according to claim 4 wherein the linking of the components is such that a linked component is performed when data in a predetermined format and/ or within predetermined parameters is received from the previous linked component.

7. A system according to claim 4 wherein if no data, or data in an unallowed format, is received from the previous linked component the performance of the next component is not permitted and user intervention with the graphical interface is then required.

8. A system according to claim 6 wherein a graphical indication is generated to the user to indicate user interaction is required.

9. A system according to claim 1 wherein the linking together of two or more components is provided as part of a live system and the procedure is repeatable.

10. A system according to claim 1 wherein the system is used as a test or development tool to allow existing business models to be tested and/or as new business models are developed, to allow the identified components for various elements and links between the same to be checked and validated to ensure that the link will operate efficiently and repeatedly before the business model becomes live.

11. A system according to claim 1 wherein the components which are identified for each element of the business model are linked.

12. A system according to claim 1 wherein components located within different elements are linked to allow the transfer of data between the same.

13. A system according to claim 12 wherein more than one element can be completed as a result of the user accessing a first component.

14. A system according to claim 1 wherein the system includes first and second development tools, wherein the first development tool is used to develop a model which represents the principles expressed by the organization with respect to the model and the second development tool is used to test the model which is developed and identify those elements and/or components of the model which are most important for achieving the expressed principles, and adapting the model accordingly.

15. A system according to claim 1 wherein no component exists at a time of use of the system, a stub or proxy component can be created that will execute alongside real components and at the point of execution of the stub or proxy, the user performs the task of that component.

16. An organization representation system, said system including at least one business model representing at least one task to be performed within the organization, identifying for said business model a series of elements which are required to be performed as part of the business model, identifying one or more components which are required to be utilised to allow each element to be completed, graphically representing each of said elements in a manner to allow user interaction therewith, linking the appropriate components to each element wherein upon user interaction with said element access is gained to said one or more components for that element.

17. A system according to claim 16 wherein the system includes a means for providing an indication to the user of metrics associated with the execution of the components and with the effectiveness of the business model, including the progression of the performance of the business model at a given instant of time.

18. A system according to claim 17 wherein the indication is a change in condition of the graphical interface which allows the elements to be provided in a first condition if the components linked thereto have not been performed and the element to change to a second condition once the components for that element have been completed.

19. A system according to claim 18 wherein there is provided a third condition which can be shown for each element, said condition generated intermediate the first and second indications so as to show to the user which particular component of an element is being performed at that time.

20. A system according to claim 17 wherein a graphical representation is provided which shows the extent of completion of each element, or components linked to said element.

21. A method of generating, testing and/or using a model of at least part of an organisation, said method including the steps of developing the model representing at least one task to be performed within the organization, identifying for said model a series of elements which are required to be performed as part of the model, identifying one or more components which are required to be utilized to allow each element to be completed and linking the same and, graphically representing each of said elements in a manner to allow user interaction therewith, wherein, upon user interaction with a specific element access is gained to said one or more components for that element which are then performed.

22. A method according to claim 21 wherein the method includes the step of inputting data into the components upon the selection of the element.

23. A method according to claim 21 wherein at least some of the plurality of components are linked so as to allow data used and/or generated in the performance of a first component to be passed to a linked component and used in the performance of that component without the need for user interaction with the model.

24. A method according to claim 23 wherein the components which are linked relate to different elements so as to allow the performance to be performed in sequence.

25. A method according to claim 21 wherein the method includes generating an indication to the user of the performance of said linked components.

26. A method according to claim 21 wherein the components are linked in series and performed in a predefined sequence.
